# EUROPÄISCHE PATENTSCHRIFT

(11) **EP 1 926 373 B1**
(45) Veröffentlichungstag und Bekanntmachung des Hinweises auf die Patenterteilung: **27.01.2010**
(21) Anmeldenummer: 06777083.4
(22) Anmeldetag: 26.08.2006
(51) Int. Cl.: A01N 43/40, A01N 47/40, A01N 51/00, A01N 25/30, A01N 25/00, A01P 7/00

(54) **VERWENDUNG VON CNI-SL-FORMULIERUNGEN ZUR BEKÄMPFUNG DER WEISSEN FLIEGE**
USE OF CNI-SL FORMULATIONS FOR CONTROLLING WHITE FLY
UTILISATION DE PREPARATIONS DE CNI-SL POUR LUTTER CONTRE LA MOUCHE BLANCHE

(30) Priorität: 09.09.2005 DE 102005042881
(43) Veröffentlichungstag der Anmeldung: 04.06.2008
(73) Patentinhaber: BAYER CROPSCIENCE AG, 40789 Monheim (DE)
(72) Erfinder: BAILO-SCHLEIERMACHER, Isidro, 51371 Leverkusen (DE); BRÜGGEN, Kai-Uwe, Khar West, 54 Mumbai (IN); HUNGENBERG, Heike, 40764 Langenfeld (DE); THIELERT, Wolfgang, 51519 Odenthal (DE); DAVIES, Lorna, Elizabeth, Kansas City MO 64118 (US)
(74) Vertreter: Bader, Axel Jochen
(86) Internationale Anmeldenummer: PCT/EP2006/008388
(87) Internationale Veröffentlichungsnummer: WO 2007/028518

(56) Entgegenhaltungen:
- WO-A-02/098230
- I.ISHAAYA ET AL.: "Effect of the Surfactant BB5 on the Potency of Thiamethoxam against the Whitefly Bemisia Tabaci" PHYTOPARASITICA (WEB SITE POSTING 20.12.2004), Bd. 33, Nr. 1, 2005, Seiten 57-59, XP002467463
- DATABASE CA [Online] CHEMICAL ABSTRACTS SERVICE, COLUMBUS, OHIO, US; G.W.ELZEN: "Laboratory toxicity of insecticide residues to sweetpotato whitefly (Homoptera: Aleyrodidae) eggs, nymphs and adults on sweet potato, cabbage, and cotton" XP002467465 gefunden im STN-INTERNATIONAL Database accession no. 144:18138 & SOUTHWESTERN ENTOMOLOGIST, Bd. 29, Nr. 2, 2004, Seiten 147-152,
- DATABASE CA [Online] CHEMICAL ABSTRACTS SERVICE, COLUMBUS, OHIO, US; C.M.HOLGUIN: "Effect of chemical insecticide application for control of the whitefly Aleurotrachelus socialis (Homoptera: Aleyrodidae) in cassava Manohot esculenta Crantz" XP002467466 gefunden im STN-INTERNATIONAL Database accession no. 141:390390 & REVISTA COLOMBIANA DE ENTOMOLOGIA, Bd. 30, Nr. 1, 2004, Seiten 37-42,
- DATABASE CA [Online] CHEMICAL ABSTRACTS SERVICE, COLUMBUS, OHIO, US; A.R.HOROWITZ: "Comparative toxicity of foliar and systemic applications of acetamiprid and imidacloprid against the cotton whitefly, Bemisia tabaci (Hemiptera: Aleyrodidae)" XP002467467 gefunden im STN-INTERNATIONAL Database accession no. 129:312123 & BULLETIN OF ENTOMOLOGY RESEARCH, Bd. 88, Nr. 4, 1998, Seiten 437-442, in der Anmeldung erwähnt
- L.WEICHEL ET AL.: "Uptake, translocation and bioavailability of imidacloprid in several hop varieties" PEST MANAGEMENT SCIENCE, Bd. 60, 2003, Seiten 440-446, XP002467464

## Beschreibung

Innerhalb der großen Gruppe saugender Schädlinge wie z.B. Vertretern aus den Ordnungen der Heteroptera und der Homoptera stellen Weiße Fliegen (Gattung: Aleyrodina; Familie: Aleyrodidae) und hierbei Arten wie *Trialeurodes vaporariorum* und insbesondere *Bemisia tabaci* weltweit verbreitete Schädlingsarten beim Anbau vieler Getreide- und Gemüsesorten (Byrne & Bellows, Annual Review of Entomology (1991) 36, 431 - 457; Byrne et al., in: Whiteflies: their bionomics, pest status and management, Intercept, Andover, UK, 1990, S. 227 - 267) dar. Eine Bekämpfung dieses Schädlings ist deshalb von hoher wirtschaftlicher Bedeutung. Zu den dabei eingesetzten. Schädlingsbekämpfungsmitteln gehören unter anderem auch solche, die Insektizide aus der Reihe der Neonicotinyle (z.B. Imidacloprid oder Acetamiprid) enthalten. Ein entsprechendes Mittel wird beispielsweise unter dem Namen Confidor ® SL 200 von der Firma Bayer CropScience (Monheim, Deutschland) vermarktet.

Während diese Mittel sehr wirksam gegen alle Lebenszyklen des Schädlings sind, wenn sie systemisch (als Gießlösung) appliziert werden, sind sie bei Spritzapplikation nur unzureichend gegen Eier und Nymphen wirksam (Horowitz et al., *Bulletin of Entomological Research* (1988) **88**, 437-442). Der Hauptgrund dafür ist, dass sich diese auf der Unterseite der Blätter befinden und dort weitgehend unbeweglich sind. Sie werden deshalb bei der üblichen Spritzbehandlung - im Gegensatz zu den adulten Tieren - nicht von den Insektiziden erreicht und bewirken nach ihrer weiteren Entwicklung einen erneuten Befall der Pflanze mit Schädlingen.

I.Ishaaya et al. (Phytoparasitica 33(1) 2005, 57-59) beschreiben die Erhöhung der Aktivität des mittels Spritzapplikation angewendeten Neonicotinyl-Insektizids Thiamethoxam gegen Nymphenstadien der Weissen Fliege *Bemisia tabaci* durch den Penetrationsförderer BB5.

Es wurde nun überraschend gefunden, dass bestimmte Formulierungen von Neonicotinylen bei Spritzapplikationen eine deutlich verbesserte Wirkung gegen Eier und Nymphenstadien der Weißen Fliege zeigen als die etablierten Formulierungen bei gleichartiger Anwendung.

Gegenstand der Erfindung ist daher die Verwendung von Wirkstoff-Formulierungen, enthaltend mindestens ein Insektizid aus der Reihe der Neonicotinyle, zur Bekämpfung von Eiern und Nymphenstadien der Weißen Fliege durch Spritzapplikation.

Formulierungen, die sich für die erfindungsgemäße Verwendung eignen, enthalten
zwischen 0,1 und 30 Gew.-% an Fettalkoholethoxylat der Formel (I), 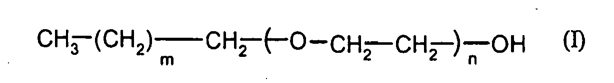 in welcher
- m: für Durchschnittswerte zwischen 8,0 und 13,0 steht und
- n: für Durchschnittswerte zwischen 6,0. und 17,0 steht,

- zwischen 1 und 50 Gew.-% an Wirkstoff aus der Gruppe der Neonicotinyle,
- zwischen 1 und 80 Gew.-% an Dimethylsulfoxid, N-Methylpyrrolidon und/oder Butylrolacton, sowie
- zwischen 0 und 20 Gew.-% an Zusatzstoffen
Die Herstellung der erfindungsgemäßen Pflanzenbehandlungsmittel erfolgt in der Weise, dass man die Komponenten in den jeweils gewünschten Verhältnissen miteinander vermischt. Im allgemeinen geht man so vor, dass man einen Wirkstoff aus der Gruppe der Neonicotinyle vorlegt und dann unter Rühren die übrigen Bestandteile in beliebiger Reihenfolge hinzufügt.

Die Temperaturen können bei der Herstellung der erfindungsgemäßen Pflanzenbehandlungsmittel in einem bestimmten Bereich variiert werden. Man arbeitet im allgemeinen bei Temperaturen zwischen 10°C und 50°C, vorzugsweise bei Raumtemperatur.

Für die Herstellung der erfindungsgemäßen Pflanzenbehandlungsmittel kommen übliche Geräte in Betracht, die zur Zubereitung von agrochemischen Formulierungen eingesetzt werden.

Als Zusatzstoffe, die in den erfindungsgemäßen Pflanzenbehandlungsmitteln enthalten sein können, kommen weitere agrochemische Wirkstoffe sowie Kristallisationsinhibitoren, -Netzmittel, Emulgatoren und auch Wasser in Frage.

Insektizide aus der Reihe der Neonicotinoide lassen sich durch folgende Formel (II) 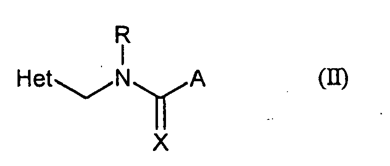 worin
- Het: für einen Heterocyclus ausgewählt aus der folgenden Gruppe von Heterocyclen steht: 2-Chlorpyrid-5-yl, 2-Methylpyrid-5-yl, 1-Oxido-3-pyridino, 2-Chlor-1-oxido- 5-pyridino, 2,3-Dichlor-1-oxido-5-pyridino, Tetrahydrofuran-3-yl, 5-Methyl- tetrahydrofuran-3yl, 2-Chlorothiazol-5-yl,
- A: für N(R¹)(R²) oder S(R²) steht,
worin
- R¹: für Wasserstoff, C₁-C₆-Alkyl, Phenyl-C₁-C₄-Alkyl, C₃-C₆-Cycloalkyl, C₂-C₆-Alkenyl oder C₂-C₆-Alkinyl steht, und
- R²: für C₁-C₆-Alkyl, C₂-C₆-Alkenyl, C₂-C₆-Alkinyl, -C(=O)-CH₃ oder Benzyl steht,
- R: für C₁-C₆-Alkyl, C₂-C₆Alkenyl, C₂-C₆-Alkinyl, -C(=O)-CH₃ oder Benzyl steht oder gemeinsam mit R² für eine der folgenden Gruppen steht:
-CH₂-CH₂-, -CH₂-CH₂-CH₂-, -CH₂-O-CH₂-, -CH₂-S-CH₂-, -CH₂-NH-CH₂-, -CH₂-N-(CH₃)-CH₂- und
- X: für N-NO₂, N-CN oder CH-NO₂ steht,
beschreiben (siehe z.B. EP-A1-192 606, EP-A2-580 533, EP-A2-376 279, EP-A2-235 725).

Im Einzelnen seien folgende Verwindungen genannt, die erfindungsgemäß verwendet werden können.

Eine erfindungsgemäß bevorzugt verwendete Verbindung ist Thiamethoxam.

Thiamethoxam besitzt die Formel 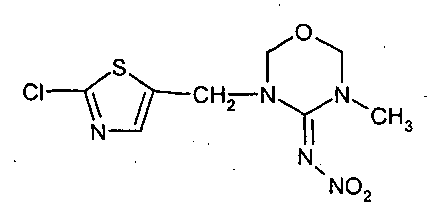 und ist bekannt aus EP A2 0 580 533.

Eine weitere erfindungsgemäß bevorzugt verwendete Verbindung ist Clothianidin.

Clothianidin besitzt die Formel 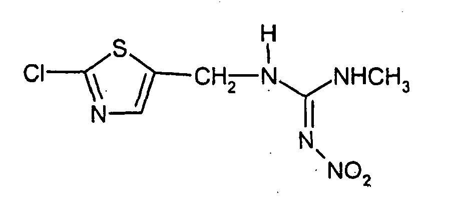 und ist bekannt aus EP A2 0 376 279.

Eine weitere erfindungsgemäß bevorzugt verwendete Verbindung ist Thiacloprid.

Thiacloprid besitzt die Formel 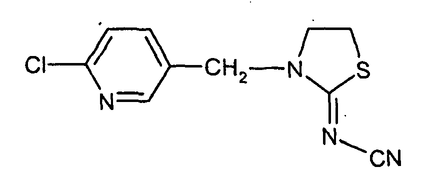 und ist bekannt aus EP A2 0 235 725.

Eine weitere erfindungsgemäß bevorzugt verwendete Verbindung ist Dinotefuan.

Dinotefuran besitzt die Formel 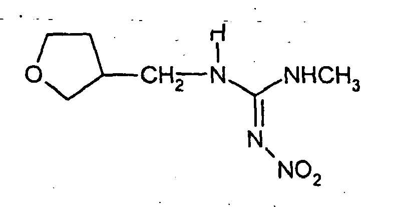 und ist bekannt aus EP A1 0 649 845.

Eine weitere erfindungsgemäß bevorzugt verwendete Verbindung ist Acetamiprid.

Acetamiprid besitzt die Formel 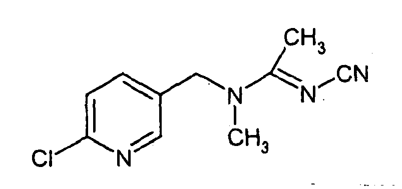 und ist bekannt aus WO A1 91/04965.

Eine weitere erfindungsgemäß bevorzugt verwendete Verbindung ist Nitenpyram.

Nitenpyram besitzt die Formel 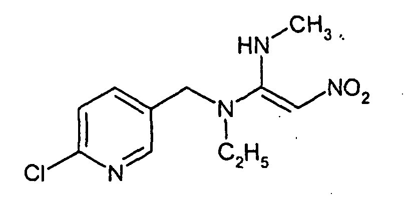 und ist bekannt aus EP A2 0 302 389.

Eine weitere erfindungsgemäß bevorzugt verwendete Verbindung ist Imidacloprid.

Imidacloprid besitzt die Formel 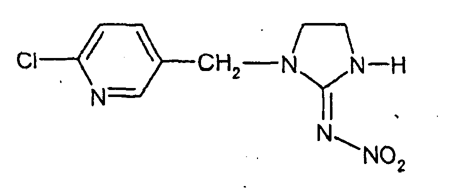 und ist bekannt aus EP 0 192 060.

Eine erfindungsgemäß besonders bevorzugt verwendete Verbindung ist Imidacloprid.

Die Alkanol-Alkoxylate sind durch die obige Formel (I) allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Bevorzugt verwendbar sind Fettalkoholethoxylate der Formel (I), in denen
- m: für Durchschnittswerte zwischen 9,0 und 12,0 steht und
- n: für Durchschnittswerte zwischen 7,0 und 9,0 steht.

Ganz besonders bevorzugt ist Fettalkoholethoxylat der Formel (I), in welcher
- m: für den Durchschnittswert 10,5 steht und
- n: für den Durchschnittswert 8,4 steht.

Die Alkanol-Alkoxylate der angegebenen Formeln sind bekannt oder lassen sich nach bekannten Methoden herstellen (vgl. WO 98-35 553, WO 00-35 278 und EP-A 0 681 865). Formulierungen mit Neonicotinoiden sind bekannt aus WO 02/098230.

Der erfindungsgemäß einsetzbaren Formulierungen können in einer besondereren Ausführungsform noch mindestens einen weiteren Wirkstoff (Insektizide, Lockstoffe, Sterilantien, Bakterizide, Akarizide, Nematizide, Fungizide, wachstumsregulierenden Stoffe oder Herbizide) enthalten. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Besonders günstige Mischpartner sind z.B. die folgenden:

### Fungizide:

Inhibitoren der Nucleinsäure Synthese
Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure

Inhibitoren der Mitose und Zellteilung
Benomyl, Carbendazim, Diethofencarb, Fuberidazole, Pencycuron, Thiabendazol, Thiophanat-methyl, Zoxamid

Inhibitoren der Atmungskette Komplex I
Diflumetorim

Inhibitoren der Atmungskette Komplex II
Boscalid, Carboxin, Fenfuram, Flutolanil, Furametpyr, Mepronil, Oxycarboxin, Penthiopyrad, Thifluzamid

Inhibitoren der Atmungskette Komplex III
Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin

Entkoppler
Dinocap, Fluazinam

Inhibitoren der ATP Produktion
Fentinacetat, Fentinchlorid, Fentinhydroxid, Silthiofam

Inhibitoren der Aminosäure- und Proteinbiosynthese
Andoprim, Blasticidin-S, Cyprodinil, Kasugamycin, Kasugamycinhydrochlorid Hydrat, Mepanipyrim, Pyrimethanil

Inhibitoren der Signal-Transduktion
Fenpiclonil, Fludioxonil, Quinoxyfen

Inhibitoren der Fett- und Membran Synthese
Chlozolinat, Iprodion, Procymidon, Vinclozolin
Ampropylfos, Kalium-Ampropylfos, Edifenphos, Iprobenfos (IBP), Isoprothiolan, Pyrazophos
Tolclofos-methyl, Biphenyl
Iodocarb, Propamocarb, Propamocarb hydrochlorid

Inhibitoren der Ergosterol Biosynthese
Fenhexamid,
Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol,
Aldimorph, Dodemorph, Dodemorphacetat, Fenpropimorph, Tridemorph, Fenpropidin, Spiroxamin,
Naftifin, Pyributicarb, Terbinafin

Inhibitoren der Zellwand Synthese
Benthiavalicarb, Bialaphos, Dimethomorph, Flumorph, Iprovalicarb, Polyoxins, Polyoxorim, Validamycin A

Inhibitoren der Melanin Biosynthese
Capropamid, Diclocymet, Fenoxanil, Phtalid, Pyroquilon, Tricyclazol

Resistenzinduktion
Acibenzolar-S-methyl, Probenazol, Tiadinil

Multisite
Captafol, Captan, Chlorothalonil, Kupfersalze wie: Kupferhydroxid, Kupfernaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

Unbekannter Mechanismus
Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat_{;} Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]-3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin_{;} 5-Chlor-6-(2,4,6-trifluorophenyl)-N-[(1R)-1,2,2-trimethylpropyl] [1,2,4]triazolo[ 1,5-a]pyrimidin-7-amin, 5-Chlor-N-[(1R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1 - carbonsäure, O-[1-[(4-Methoxyphenoxy)methyl]-2,2-dimethylpropyl]-1H-imidazol-1- carbothioic acid, 2-(2-{[6-(3-Chlor-2-methylphenoxy)-5-fluorpyrimidin-4-yl]oxy}phenyl)-2-(methoxyimino)-N-methylacetamid

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

### Acetylcholinesterase (AChE) Inhibitoren

### Carbamate,

zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate

### Organophosphate,

zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Farnphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion

### Natrium-Kanal-Modulatoren / Spannungsabhängige Natrium-Kanal-Blocker

### Pyrethroide,

zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Perrnethrin, Clocythrin, Cycloprothrin, Cyfluthrin, Cyhalothrin, Cypermethrin (alpha-, beta-, theta-, zeta-), Cyphenothrin, Deltamethrin, Empenthrin (IR-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda- Cyhalothrin, Metofluthrin, Permethrin (cis-, trans-), Phenothrin (1R-trans isomer); Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)

### DDT

### Oxadiazine,

zum Beispiel Indoxacarb

### Acetylcholin-Rezeptor-Agonisten/-Antagonisten

### Chloronicotinyle,

zum Beispiel Acetamiprid, Clothianidin, Dinotefuran, Imidacloprid, Nitenpyram, Nithiazine, Thiacloprid, Thiamethoxam
Nicotine, Bensultap, Cartap

### Acetylcholin-Rezeptor-Modulatoren

### Spinosyne,

zum Beispiel Spinosad

### GABA-gesteuerte Chlorid-Kanal-Antagonisten

### Organochlorine,

zum Beispiel Camphechlor, Chlordane, Endosulfan, Gamma-HCH, HCH, Heptachlor, Lindane, Methoxychlor

### Fiprole,

zum Beispiel Acetoprole, Ethiprole, Fipronil, Pyrafluprole, Pyriprole, Vaniliprole

### Chlorid-Kanal-Aktivatoren

### Mectine,

zum Beispiel Avermectin, Emamectin, Emamectin-benzoate, Ivermectin, Milbemycin

### Juvenilhormon-Mimetika,

zum Beispiel Diofenolan, Epofenonane, Fenoxycarb, Hydroprene, Kinoprene, Methoprene, Pyriproxifen, Triprene

### Ecdysonagonisten/disruptoren

### Diacylhydrazine,

zum Beispiel Chromafenozide, Halofenozide, Methoxyfenozide, Tebufenozide

### Inhibitoren der Chitinbiosynthese

### Benzoylharnstoffe,

zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron

### Buprofezin

### Cyromazine

Inhibitoren der oxidativen Phosphorylierung, ATP-Disruptoren

### Diafenthiuron

### Organozinnverbindungen,

zum Beispiel Azocyclotin, Cyhexatin, Fenbutatin-oxide

Entkoppler der oxidativen Phoshorylierung durch Unterbrechung des H-Protongradienten

### Pyrrole,

zum Beispiel Chlorfenapyr

### Dinitrophenole,

zum Beispiel Binapacyrl, Dinobuton, Dinocap, DNOC

### Seite-I-Elektronentransportinhibitoren

### METI's,

zum Beispiel Fenazaquin, Fenpyroximate, Pyrimidifen, Pyridaben, Tebufenpyrad, Tolfenpyrad

### Hydramethylnon

### Dicofol

### Seite-II-Elektronentransportinhibitoren

### Rotenone

### Seite-III-Elektronentransportinhibitoren

### Acequinocyl, Fluacrypyrim

Mikrobielle Disruptoren der Insektendarmmembran

Bacillus thuringiensis-Stämme

### Inhibitoren der Fettsynthese

### Tetronsäuren,

zum Beispiel Spirodiclofen, Spiromesifen

### Tetramsäuren,

zum Beispiel Spirotetramat (CAS-Reg.-No.: 203313-25-1) und 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8)

### Carboxamide,

zum Beispiel Flonicamid

### Oktopaminerge Agonisten,

zum Beispiel Amitraz

Inhibitoren der Magnesium-stimulierten ATPase,

### Propargite

### Benzoesäuredicarboxamide,

zum Beispiel Flubendiamide

### Nereistoxin-Analoge,

zum Beispiel Thiocyclam hydrogen oxalate, Thiosultap-sodium

### Biologika, Hormone oder Pheromone

Azadirachtin, Bacillus spec., Beauveria spec., Codlemone, Metarrhizium spec., Paecilomyces spec., Thuringiensin, Verticillium spec.

Wirkstoffe mit unbekannten oder nicht spezifischen Wirkmechanismen

Begasungsmittel,

zum Beispiel Aluminium phosphite, Methyl bromide, Sulfuryl fluoride

### Fraßhemmer,

zum Beispiel Cryolite, Flonicamid, Pymetrozine

### Milbenwachstumsinhibitoren,

zum Beispiel Clofentezine, Etoxazole, Hexythiazox

Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin

In den erfindungsgemäßen Pflanzenbehandlungsmitteln kann der Gehalt an den einzelnen Komponenten innerhalb eines bestimmten Bereiches variiert werden. Bevorzugt sind diejenigen Pflanzenbehandlungsmittel, in denen die Konzentrationen
- an Fettalkoholethoxylat der Formel (I) zwischen 0,5 und 15 Gew.%,
- an Wirkstoff aus der Gruppe der Neonicotinyle zwischen 2,5 und 30 Gew.-%,
- an Dimethylsulfoxid, N-Methylpyrrolidon und/oder Butylrolacton zwischen 30 und 80 Gew.-% und
- an Zusatzstoffen zwischen 0 und 15 Gew.-%
betragen.

Handelt es sich bei den erfindungsgemäßen Pflanzenbehandlungsmitteln um anwendungsfertige Produkte, so sind diejenigen bevorzugt, in denen der Gehalt
- an Fettalkoholethoxylat der Formel (I) zwischen 0,01 und 0,2 Gew.%,
- an Wirkstoff aus der Gruppe der Neonicotinyle zwischen 0,01 und 0,03 Gew.%,
- an Dimethylsulfoxid, N-Methylpyrrolidon und/oder Butyrolacton zwischen 0 und 50 Gew.-% und
- an Zusatzstoffen zwischen 0 und 95 Gew.-%
liegt.

Die Herstellung der erfindungsgemäßen Pflanzenbehandlungsmittel erfolgt in der Weise, dass man die Komponenten in den jeweils gewünschten Verhältnissen miteinander vermischt. Im allgemeinen geht man so vor, dass man einen Wirkstoff aus der Gruppe der Neonicotinyle vorlegt und dann unter Rühren die übrigen Bestandteile in beliebiger Reihenfolge hinzufügt.

Die Temperaturen können bei der Herstellung der erfindungsgemäßen Pflanzenbehandlungsmittel in einem bestimmten Bereich variiert werden. Man arbeitet im allgemeinen bei Temperaturen zwischen 10°C und 50°C, vorzugsweise bei Raumtemperatur.

Für die Herstellung der erfindungsgemäßen Pflanzenbehandlungsmittel kommen übliche Geräte in Betracht, die zur Zubereitung von agrochemischen Formulierungen eingesetzt werden.

Erfindungsgemäß verwendbare Formulierungen lassen sich durch Verdünnen mit Wasser in homogene Spritzflüssigkeiten überführen. Die Anwendung dieser Spritzflüssigkeiten erfolgt erfindungsgemäß durch Verspritzen.

Die Aufwandmenge an den erfindungsgemäß verwendeten Formulierungen kann innerhalb eines größeren Bereiches variiert werden. Sie richtet sich nach den jeweiligen agrochemischen Wirkstoffen und nach deren Gehalt in den Formulierungen.

Die erfindungsgemäßen Pflanzenbehandlungsmittel können entweder als solche oder nach vorherigem Verdünnen mit Wasser oder anderen Verdünnungsmitteln ausgebracht werden, also zum Beispiel als Emulsionen, Suspensionen, Lösungen oder Aerosole. Die Anwendung erfolgt dabei durch Spritzen, Gießen, Sprühen, Injizieren oder Streichen.

Mit den erfindungsgemäßen Formulierungen können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Hervorgehoben sei hierbei die besonders vorteilhafte Wirkung der erfindungsgemäßen Mittel hinsichtlich der Anwendung in Getreidepflanzen, wie z.B. Weizen, Hafer, Gerste, Dinkel, Triticale und Roggen, aber auch in Mais, Hirse, Reis, Zuckerrohr, Soja, Sonnenblumen, Kartoffeln, Baumwolle, Raps, Canola, Tabak, Zuckerrüben Futterrüben, Spargel, Hopfen sowie Obstpflanzen (umfassend Kernobst wie z.B. Äpfel und Birnen, Steinobst wie z.B. Pfirsiche, Nektarinen, Kirschen, Pflaumen und Aprikosen, Zitrusfrüchte wie z.B. Orangen, Grapefruits, Limetten, Zitronen, Kumquats, Mandarinen und Satsumas, Nüsse wie z.B. Pistazien, Mandeln, Walnüsse und Pecannüsse, tropische Früchte wie z.B. Mango, Papaya, Ananas, Datteln und Bananen, und Weintrauben) und Gemüse (umfassend Blattgemüse, wie z.B. Endivien, Feldsalat, Knollenfenchel, Kopf- und Pflücksalate, Mangold, Spinat und Zichoriensalat, Kohlgemüse wie z.B. Blumenkohl, Brokkoli, Chinakohl, Grünkohl (Winter- oder Krauskohl), Kohlrabi, Rosenkohl, Rotkohl, Weißkohl und Wirsing, Fruchtgemüse wie z.B. Auberginen, Gurken, Paprika, Speisekürbisse, Tomaten, Zucchini und Zückermais,. Wurzelgemüse wie z.B. Knollensellerie, Mairüben, Möhren, Gelbe Rüben, Radieschen, Rettich, Rote Rüben, Schwarzwürzeln und Stangensellerie, Hülsenfrüchte wie z.B. Erbsen und Bohnen sowie Zwiebelgemüse wie z.B. Lauch und Speisezwiebeln).

Die erfindungsgemäße Behandlung der Pflanzen und Pflanzenteile mit den erfindungsgemäßen Formulierungen erfolgt durch Sprühen, Verdampfen oder Vernebeln, bevorzugt durch Sprühen.

Die enthaltenen agrochemischen Wirkstoffe entfalten dabei eine bessere biologische Wirksamkeit gegen alle Stadien der Weißen Fliege als bei Applikation in Form der entsprechenden herkömmlichen Formulierungen.

Die Erfindung wird durch die folgenden Beispiele veranschaulicht. Die Beispiele sind nicht beschränkend zu verstehen.

### Herstellungsbeispiel

Zur Herstellung einer Formulierung werden
- 20 g: Imidacloprid
unter Rühren bei Raumtemperatur nacheinander mit
- 5 g: des unter der Bezeichnung Luviskol VA 64 (Fa. BASF) bekannten Copolymerisates aus Polyvinylpyrrolidon und Polyvinylalkohol,
- 10g: des unter der Bezeichnung Genapol C-100 (Fa. Clariant) bekannten Fettalkoholethoxylates der Formel (I), in welcher
m für den Durchschnittswert 10,5 steht und
n für den Durchschnittswert 8,4 steht, und
- 65 g: N-Methyl-pyrrolidon
versetzt. Nach beendeter Zugabe wird noch 5 Minuten bei Raumtemperatur nachgerührt. Man erhält auf diese Weise eine homogene Flüssigkeit.

### Anwendungsbeispiel

Baumwollpflanzen *(Gossypium hirsutum),* die von Eiern und Larven der Weißen Fliege *(Bemisia tabaci)* befallen sind, werden durch Sprühen mit einer Zusammensetzung der gewünschten Zusammensetzung und Konzentration behandelt.

Nach der gewünschten Zeit wird die Abtötung in % bestimmt. Dabei bedeutet 100 %, dass alle Tiere abgetötet wurden; 0 % bedeutet, dass keine Tiere abgetötet wurden.

| Zusammensetzung | % Abtötung nach der angegebenen Zeit bei der angegebenen Wirkstoffkonzentration | | | |
|---|---|---|---|---|
| | Eier/14d | L1/10d | L3/13d | Adulte/6d |
| Stand der Technik | 60 | 0 | 0 | 60 |
| Confidor® SL200 | 150g/ha | -12,5 g/ha | 5 g/ha | 5 g/ha |
| Erfindungsgemäß | 100 | 90 | 50 | 100 |
| Confidor® SL200 forte | 150 g/ha | 12,5 g/ha | 5 g/ha | 5 g/ha |

## Patentansprüche

1. Verwendung von agrochemischen Formulierungen, enthaltend
- mindestens ein Insektizid aus der Reihe der Neonicotinyle,
- mindestens ein Fettalkoholethoxylat der Formel (I), 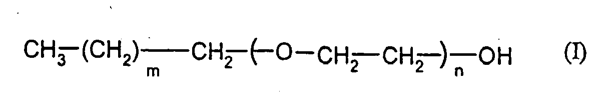 in welcher
m für Durchschnittswerte zwischen 8,0 und 13,0 steht und
n für Durchschnittswerte zwischen 6,0 und 17,0 steht,
- mindestens ein Lösungsmittel aus der Gruppe Dimethylsulfoxid, N-Methylpyrrolidon und Butylrolacton,
- gegebenenfalls Zusatzstoffe,
zur Bekämpfung von Eiern und Nymphenstadien der Weißen Fliege durch Spritzapplikation.

2. Verwendung nach Anspruch 1, **dadurch gekennzeichnet, dass** die agrochemische Formulierung
- zwischen 0,1 und 30 Gew.-% eines Fettalkoholethoxylats der Formel (I), wobei
m für Durchschnittswerte zwischen 8,0 und 13,0 steht und
n für Durchschnittswerte zwischen 6,0 und 17,0 steht,
- zwischen 1 und 50 Gew.-% an mindestens einem Wirkstoff aus der Gruppe der Neonicotinyle,
- zwischen 1 und 80 Gew.-% an Dimethylsulfoxid, N-Methylpyrrolidon und/oder Butylrolacton, sowie
- zwischen 0 und 20 Gew.-% an Zusatzstoffen
enthält.

3. Verwendung nach Anspruch 1, **dadurch gekennzeichnet, dass** die verwendete agrochemische Formulierung
- zwischen 0,1 und 30 Gew.-% an Fettalkoholethoxylat der Formel (I), wobei
m für Durchschnittswerte zwischen 9,0 und 12,0 steht und
n für Durchschnittswerte zwischen 7,0 und 9,0 steht,
- zwischen 1 und 50 Gew.-% an mindestens einem Wirkstoff aus der Gruppe der Neonicotinyle,
- zwischen 1 und 80 Gew.-% an Dimethylsulfoxid, N-Methylpyrrolidon und/oder Butylrolacton, sowie
- zwischen 0 und 20 Gew.-% an Zusatzstoffen
enthält.

4. Verfahren zur Bekämpfung von Eiern und Nymphenstadien der Weißen Fliege, **dadurch gekennzeichnet, dass** eine wirksame Menge mindestens eines Insektizids aus der Reihe der Neonicotinide durch Versprühen einer agrochemischen Formulierungen, enthaltend mindestens ein Insektizid aus der Reihe der Neonicotinyle, mindestens ein Fettalkoholethoxylat der Formel (I), mindestens ein Lösungsmittel aus der Gruppe Dimethylsulfoxid, N-Methyl-pyrrolidon und Butylrolacton, sowie gegebenenfalls Zusatzstoffe, auf Pflanzen ausgebracht wird.

5. Verfahren nach Anspruch 4, **dadurch gekennzeichnet, dass** die verwendete agrochemische Formulierung
- zwischen 0,1 und 30 Gew.-% an Fettalkoholethoxylat der Formel (I),
in welcher
m für Durchschnittswerte zwischen 8,0 und 13,0 steht und
n für Durchschnittswerte zwischen 6,0 und 17,0 steht,
- zwischen 1 und 50 Gew.-% an mindestens einem Wirkstoff aus der Gruppe der Neonicotinyle,
- zwischen 1 und 80 Gew.-% an Dimethylsulfoxid, N-Methylpyrrolidon und/oder Butylrolacton, sowie
- zwischen 0 und 20 Gew.-% an Zusatzstoffen
enthält.

6. Verfahren nach Anspruch 5, **dadurch gekennzeichnet, dass** die verwendete agrochemische Formulierung
- zwischen 0,1 und 30 Gew.-% an Fettalkoholethoxylat der Formel (I),
in welcher
m für Durchschnittswerte zwischen 9,0 und 12,0 steht und
n für Durchschnittswerte zwischen 7,0 und 9,0 steht.
- zwischen 1 und 50 Gew.-% an mindestens einem Wirkstoff aus der Gruppe der Neonicotinyle,
- zwischen 1 und 80 Gew.-% an Dimethylsulfoxid, N-Methylpyrrolidon und/oder Butylrolacton, sowie
- zwischen 0 und 20 Gew.-% an Zusatzstoffen
enthält.

## Claims

1. Use of agrochemical formulations containing
- at least one insecticide from the neonicotinyl series,
- at least one fatty alcohol ethoxylate of the formula (I), 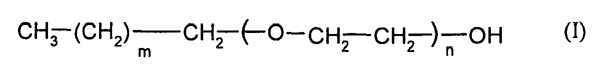 in which
m represents average values of between 8.0 and 13.0 and
n represents average values of between 6.0 and 17.0,
- at least one solvent from the group consisting of dimethyl sulphoxide, N-methylpyrrolidone and butyrolactone,
- if appropriate, additives,
for controlling eggs and nymphal stages of whitefly by spray application.

2. Use according to Claim 1, **characterized in that** the agrochemical formulation contains
- between 0.1 and 30% by weight of a-fatty alcohol ethoxylate of the formula (I), in which
m represents average values of between 8.0 and 13.0 and
n represents average values of between 6.0 and 17.0,
- between 1 and 50% by weight of at least an active substance from the neonicotinyl group,
- between 1 and 80% by weight of dimethyl sulphoxide, N-methylpyrrolidone and/or butyrolactone, and
- between 0 and 20% by weight of additives.

3. Use according to Claim 1, **characterized in that** the agrochemical formulation used contains
- between 0.1 and 30% by weight of fatty alcohol ethoxylate of the formula (I), in which
m represents average values of between 9.0 and 12.0 and
n represents average values of between 7.0 and 9.0,
- between 1 and 50% by weight of at least an active substance from the neonicotinyl group,
- between 1 and 80% by weight of dimethyl sulphoxide, N-methylpyrrolidone and/or butyrolactone, and
- between 0 and 20% by weight of additives.

4. Method of controlling eggs and nymphal stages of whitefly, **characterized in that** an effective amount of at least one insecticide from the series of the neonicotinyls is applied to plants by spraying an agrochemical formulation containing at least one insecticide from the series of the neonicotinyls, at least one fatty alcohol ethoxylate of the formula (I), at least one solvent from the group consisting of dimethyl sulphoxide, N-methylpyrrolidone and butyrolactone, and, if appropriate, additives.

5. Method according to Claim 4, **characterized in that** the agrochemical formulation used contains
- between 0.1 and 30% by weight of fatty alcohol ethoxylate of the formula (I),
in which
m represents average values of between 8.0 and 13.0 and
n represents average values of between 6.0 and 17.0,
- between 1 and 50% by weight of at least an active substance from the neonicotinyl group,
- between 1 and 80% by weight of dimethyl sulphoxide, N-methylpyrrolidone and/or butyrolactone, and
- between 0 and 20% by weight of additives.

6. Method according to Claim 5, **characterized in that** the agrochemical formulation used contains
- between 0.1 and 30% by weight of fatty alcohol ethoxylate of the formula (I),
in which
m represents average values of between 9.0 and 12.0 and
n represents average values of between 7.0 and 9.0,
- between 1 and 50% by weight of at least an active substance from the neonicotinyl group,
- between 1 and 80% by weight of dimethyl sulphoxide, N-methylpyrrolidone and/or butyrolactone, and
- between 0 and 20% by weight of additives.

## Revendications

1. Utilisation de formulations agrochimiques contenant
- au moins un insecticide de la série des néonicotinyles,
- au moins un éthoxylate d'alcool gras de formule (I)
CH₃-(CH)₂)ₘ-CH₂-(-O-CH₂-CH₂-)ₙ-OH (I)
dans laquelle
m représente des valeurs moyennes comprises entre 8,0 et 13,0 et
n représente des valeurs moyennes comprises entre 6,0 et 17,0,
- au moins un solvant du groupe comprenant le diméthylsulfoxyde, la N-méthylpyrrolidone et la butyrolactone,
- éventuellement des additifs,
pour combattre les oeufs et les stades nymphaux de la mouche blanche des serres par application par pulvérisation.

2. Utilisation suivant la revendication 1, **caractérisée en ce que** la formulation agrochimique contient
- entre 0,1 et 30 % en poids d'un éthoxylate d'alcool gras de formule (I), dans laquelle
m représente des valeurs moyennes comprises entre 8,0 et 13,0 et
n représente des valeurs moyennes comprises entre 6,0 et 17,0,
- entre 1 et 50 % en poids d'au moins une substance active du groupe des néonicotinyles,
- entre 1 et 80 % en poids de diméthylsulfoxyde, de N-méthylpyrrolidone et/ou de butyrolactone, ainsi que
- entre 0 et 20 % en poids d'additifs.

3. Utilisation suivant la revendication 1, **caractérisée en ce que** la formulation agrochimique utilisée contient
- entre 0,1 et 30 % en poids d'un éthoxylate d'alcool gras de formule (I), dans laquelle
m représente des valeurs moyennes comprises entre 9,0 et 12,0 et
n représente des valeurs moyennes comprises entre 7,0 et 9,0,
- entre 1 et 50 % en poids d'au moins une substance active du groupe des néonicotinyles,
- entre 1 et 80 % en poids de diméthylsulfoxyde, de N-méthylpyrrolidone et/ou de butyrolactone, ainsi que
- entre 0 et 20 % en poids d'additifs.

4. Procédé pour combattre les oeufs et les stades nymphaux de la mouche blanche des serres, **caractérisé en ce qu'**une quantité efficace d'au moins un insecticide de la série des néonicotinides est appliquée à des plantes par pulvérisation d'une formulation agrochimique contenant au moins un insecticide de la série des néonicotinyles, au moins un éthoxylate d'alcool gras de formule (I), au moins un solvant du groupe comprenant le diméthylsulfoxyde, la N-méthylpyrrolidone et la butyrolactone, ainsi que, le cas échéant, des additifs.

5. Procédé suivant la revendication 4, **caractérisé en ce que** la formulation agrochimique utilisée contient
- entre 0,1 et 30 % en poids d'un éthoxylate d'alcool gras de formule (I), dans laquelle
m représente des valeurs moyennes comprises entre 8,0 et 13,0 et
n représente des valeurs moyennes comprises entre 6,0 et 17,0,
- entre 1 et 50 % en poids d'au moins une substance active du groupe des néonicotinyles,
- entre 1 et 80 % en poids de diméthylsulfoxyde, de N-méthylpyrrolidone et/ou de butyrolactone, ainsi que
- entre 0 et 20 % en poids d'additifs.

6. Procédé suivant la revendication 5, **caractérisé en ce que** la formulation agrochimique utilisée contient
- entre 0,1 et 30 % en poids d'un éthoxylate d'alcool gras de formule (I), dans laquelle
m représente des valeurs moyennes comprises entre 9,0 et 12,0
n représente des valeurs moyennes comprises entre 7,0 et 9,0,
- entre 1 et 50 % en poids d'au moins une substance active du groupe des néonicotinyles,
- entre 1 et 80 % en poids de diméthylsulfoxyde, de N-méthylpyrrolidone et/ou de butyrolactone, ainsi que
- entre 0 et 20 % en poids d'additifs.
